# EUROPEAN PATENT APPLICATION

(11) **EP 1 043 874 A2**
(43) Date of publication of application: **11.10.2000**
(21) Application number: 00302973.3
(22) Date of filing: 07.04.2000
(51) Int. Cl.: H04L 27/26

(54) **Detection and removal of clipping in multicarrier receivers**

(30) Priority: 07.04.1999 GB 9907924
(71) Applicant: BRITISH BROADCASTING CORPORATION, London W1A 1AA (GB)
(72) Inventor: Nokes, Christopher Ryan c/o BBC Res.& Dev. Dept., Tadworth, Surrey KT20 6NP (GB); Haffenden, Oliver Paul c/o BBC Res.& Dev. Dept., Tadworth, Surrey KT20 6NP (GB); Mitchell, Justin David c/o BBC Res.& Dev. Dept., Tadworth, Surrey KT20 6NP (GB); Robinson, Adrian Paul c/o BBC Res.& Dev. Dept., Tadworth, Surrey KT20 6NP (GB); Stott, Jonathan Highton c/o BBC Res.& Dev. Dept., Tadworth, Surrey KT20 6NP (GB); Wiewiorka, Adam c/o BBC Res.& Dev. Dept., Tadworth, Surrey KT20 6NP (GB)
(74) Representative: Abnett, Richard Charles

(57) **Abstract**

A COFDM receiver includes a tuner/demodulator (34), an analog-to-digital converter (36), an impulse processor (38), and an OFDM demodulator (40). The impulse processor detects digital values which equal the clipping level in the ADC, and assumes that these represent impulsive interference. These samples are then replaced by samples of zero value.

## Description

### BACKGROUND OF THE INVENTION

This invention relates to OFDM receivers for receiving OFDM broadcasts and the like.

A system called Coded Orthogonal Frequency Division Multiplexing (COFDM) has been developed for Digital Audio Broadcasting (DAB) and Digital Terrestrial Television (known as DVB-T). The bits of each digital sample are distributed over a number of carriers at a number of different time intervals. The carriers are at different evenly-spaced frequencies. The Fast Fourier Transform (FFT) of the carriers at each time interval is taken. The output of each FFT comprises what is known as a symbol with duration of a symbol period and a plurality of these are combined into a COFDM frame. The frames are then transmitted. The distributing of bits of data in frequency and in time gives a system which is very error resistant and can cope with a high degree of multipath distortion. COFDM is a version of a system called simply OFDM (Orthogonal Frequency Division Multiplexing) with additional coding, and thus the expression OFDM encompasses also COFDM.

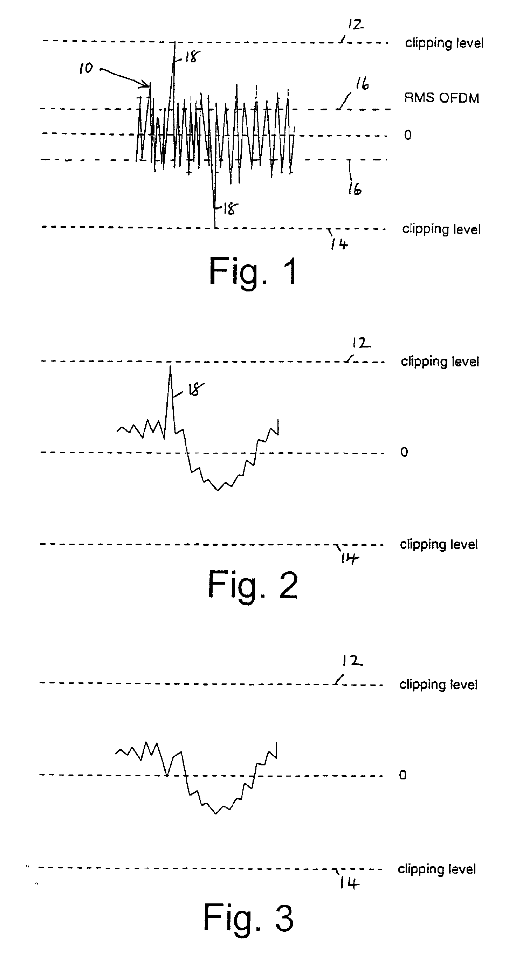

An OFDM transmitter and the OFDM system is described in more detail in European Standard EN 300 744, V1.1.2 (1997-08), Digital Video Broadcasting (DVB); Framing Structure, channel coding and modulation for digital terrestrial television, published by European Telecommunications Standards Institute (ETSI), Valbonne, France, August 1997. Reference should be made to this standard for further details of a COFDM transmitter, illustrated in Figure 1 of the standard, and of the COFDM signal and signal generation. It is assumed that the reader is familiar with this standard and the OFDM system which it describes.

Digital terrestrial television may use 64-QAM (quadrature amplitude modulation), and we have found that 64-QAM COFDM modulated signals can be subject to interference to reception, caused by impulsive interference, that is interference in the form of an impulse rather than being extended in time. Lower order modulation, e.g. 16-QAM will also be affected by impulsive interference, but the effect is less serious. Such impulsive interference can be caused for example by ignition interference from internal combustion engines or by impulses from electrical supply switching. We have appreciated that the effect of such interference is rather different from other interference, such as random noise or interfering carriers, because the energy from an impulse is distributed by the demodulation process throughout all the carriers for one symbol period. There is therefore the potential for a large proportion of the carriers to fail at the same time, thus affecting a high percentage of the data for a whole symbol period. This effect could be eliminated if time interleaving were used in the transmitted signal; this at present has not been adopted but might be in the future.

The problem can sometimes be sufficiently reduced by improving the quality of the radio frequency (RF) installation at the reception site, by better screening of down-leads and with good-quality connectors, and so on, but it may still persist.

We have appreciated therefore that it would be desirable if the OFDM demodulator itself was able to withstand a higher level of impulsive interference, even though the rather special nature of the OFDM signal means that the results of altering the demodulator might be rather unpredictable.

### SUMMARY OF THE INVENTION

The invention in its various aspects is defined in the independent claims below, to which reference should now be made. Advantageous features are set forth in the appendant claims.

A preferred embodiment of the invention is described in more detail below with reference to the drawings. This embodiment takes the form of a COFDM receiver which includes a tuner/demodulator, an analog-to-digital converter (ADC), an impulse processor, and an OFDM demodulator. The impulse processor detects digital values which equal the clipping level in the ADC, and assumes that these represent impulsive interference. These samples are then replaced by samples of zero value.

### BRIEF DESCRIPTION OF THE DRAWINGS

The invention will now be described in more detail, by way of example, with reference to the drawings, in which:
**Figure 1** is a waveform diagram showing the form of an analog OFDM signal suffering from impulsive interference in a receiver;
**Figure 2** is a view showing part of the waveform of Figure 1 in more detail;
**Figure 3** is a view of the same section of waveform after processing in accordance with the invention; and
**Figure 4** is a block circuit diagram of the relevant part of an OFDM receiver embodying the invention.

### DETAILED DESCRIPTION OF THE PREFERRED EMBODIMENT

A general view of the waveform of an OFDM signal over a short interval of time which includes impulsive interference is shown in Figure 1. The waveform 10 is shown as traversing an amplitude range above and below zero and reaching up to a maximum 12 equal to a positive clipping level and down to a negative clipping level 14. The root-mean-square (RMS) amplitude 16 above and below zero is also shown. Two interfering impulses are shown at 18, one positive and the other negatively-directed. It may be assumed that the amplitude of the impulses after the receiver's ADC (analogue-to-digital converter) will be equal to the ADC clipping level. It may also be assumed that typically the rms level of the OFDM signal at the ADC of the receiver is 10 dB below the ADC clipping level. In this case the mean carrier-to-interference ratio (C/I) for the sample where the impulse occurs will be -10 dB.

However, when transformed by the FFT (fast Fourier transform) in the receiver, the effect of the impulse is spread over the whole of the OFDM symbol. Hence the impulse energy is dispersed over all the carriers in the frequency domain. Therefore the mean C/I, for the whole symbol, is (n - 10) dB, where n is 10log₁₀N, and N is the OFDM FFT size. This assumes that there is only one impulse during the OFDM symbol period; in practice there may well be more.

Figure 2 is an expanded view of part of Figure 1 showing one of the impulses 18 more clearly.

In accordance with this invention we propose to replace the sample affected by the impulsive interference by a sample with value zero, this being the average signal value. The resultant signal portion corresponding to Figure 2 is now shown in Figure 3. This is equivalent to the original signal plus an impulse acting on the single sample, of size equal and opposite to the signal at that point. This new impulse has much less energy than the original one. On average, the C/I would be reduced to n dB. This is an improvement of 10 dB on average. This is valuable in combatting the effects of the impulsive interference.

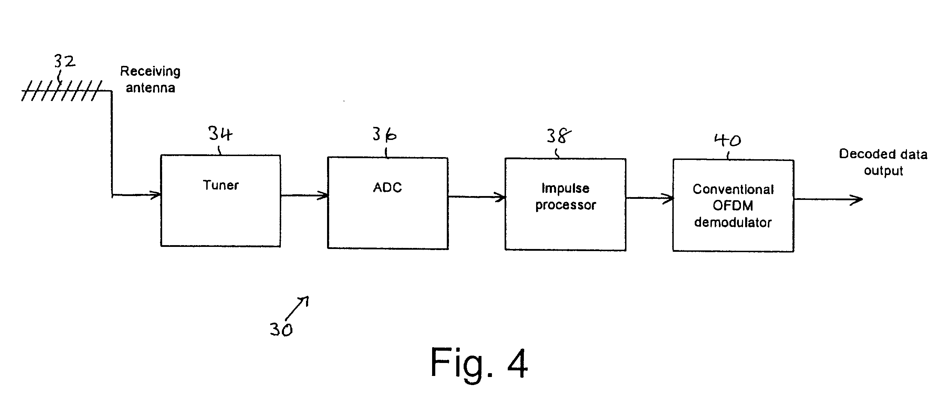

A receiver embodying the invention and adapted to use the method described with reference to and illustrated in Figure 3 will now be described with reference to Figure 4. The receiver 30 has a receiving antenna 32 connected to a tuner 34, which includes the usual RF (radio frequency) tuning and demodulation stages. The output of the tuner is applied to an analog-to-digital converter (ADC) 36. The output of the ADC 36 is applied to the input of an impulse processor 38, described below, the output of which is then applied to a conventional OFDM demodulator 40 which is not here described in detail.

The impulse processor 38 operates to detect any signals which have reached the clipping level of the ADC, and to replace them with the value zero. As this processing is carried out on the digitised signal, in the arrangement illustrated, it is straightforward to implement. Essentially the steps involved are:
- Read the next sample.
- Compare the sample amplitude with thresholds equal to the positive and negative clipping levels.
- If the sample is equal to or beyond the thresholds, replace the sample value by zero.
- If the sample is between the thresholds, leave the sample value unchanged.

In this way the effects of impulsive interference within an OFDM signal have been reduced, by replacing the interfering value by a value which causes less interference. This may help to give a receiver an improved immunity to impulsive interference.

In order to prevent false triggering of the correction procedure by the signal, that is treating a genuine signal value as though it were interference, the input to the ADC 36 should be adjusted so that, in the absence of impulsive interference, the signal itself never reaches the clipping level, or at least rarely does so. This will largely be achieved by the fact that the signal will already have been clipped by the DAC (digital-to-analogue converter) in the transmitter.

In practice, we have noted that the nature of impulsive interference relevant to OFDM signals tends to be a train of pulses, rather than a single pulse as described above. This fact can be used to assist in the prevention of false triggering. To do this, when a signal at the clipping level is detected, the sample location is marked, but no other immediate action is taken. That is to say, the sample amplitude is not yet altered. If a further signal at the clipping level, with either the same or opposite sign as the first, is subsequently detected within a predetermined time interval, then the subsequent sample is treated as interference, and processed as described above to replace the sample value by zero. If no subsequent sample is received, then no sample is altered.

Alternatively, once the second clipping level signal has been detected, both samples are processed as described above to replace the sample values by zero. It may be possible to achieve this by making use of the fact that the time domain samples are being gathered in the FFT symbol memory in the OFDM demodulator 40. Alternatively, a different level from the ADC clipping level can be used to distinguish genuine signal values from interference.

Once two impulses have been detected within the predetermined time interval, then all subsequent samples which reach the clipping level are automatically treated as interference, until a gap of a second predetermined time interval is encountered without any interference.

In a modification, only OFDM symbols which contain two or more samples which exceed the clipping level are processed by replacing them by zero-value samples.

As described above, the ADC clipping level has been assumed to act as the threshold which distinguishes between wanted signals which are below the clipping level and interference which is at or above the clipping level. Alternatively, a different level from the ADC clipping level can be used to distinguish genuine signal values from interference. Similarly, different threshold levels can be set for positive and negative impulses.

In the example described, the sample suffering from interference is replaced by a zero-value sample, this being the long-term average signal value with a positive and negative going signal. However, a predictor or estimator could be employed to improve this approximation by making a more complex estimation of the missing sample value based on a knowledge of the transmitted signal format. For example, the estimator could operate by selecting the missing sample values such that the resulting amplitudes of the unused carriers were minimised.

## Claims

1. An OFDM receiver, comprising:
a tuner/demodulator circuit for receiving and demodulating radio-frequency signals;
an analog-to-digital converter coupled to the output of the tuner/demodulator circuit for receiving the demodulated signals and converting them to digital form;
impulse processing means coupled to the analog-to-digital converter to receive the digital signals and for detecting digital values of a predetermined magnitude indicative of impulsive interference and replacing them by digital values approximating to those of the desired signal; and
an OFDM demodulator coupled to the output of the impulse processing means to provide a decoded data output signal.

2. An OFDM receiver according to claim 1, in which the impulse processing means replaces digital values of a magnitude indicative of impulsive interference with values substantially equal to the long-term average of the signal.

3. An OFDM receiver according to claim 1, in which the impulse processing means replaces digital values of a magnitude indicative of impulsive interference with values substantially equal to zero.

4. AN OFDM receiver according to claim 1, in which the impulse processing means replaces digital values of a magnitude indicative of impulsive interference with values estimated or predicted from the digital signals.

5. An OFDM receiver according to any preceding claim, in which the impulse processing means detects digital values indicative of impulsive interference by comparing the digital values with one or more threshold values.

6. An OFDM receiver according to claim 5, in which the threshold values are substantially equal to the positive and negative clipping levels of the analogue-to-digital converter.

7. An OFDM receiver according to any preceding claim, in which the impulse processing means detects digital values indicative of impulsive interference only when two digital values from samples occurring within a predetermined time interval both reach or exceed a predetermined value.

8. An OFDM receiver according to claim 7, in which the first sample value detected as indicative of impulsive interference within a predetermined interval, particularly within an OFDM symbol, is not replaced.

9. An OFDM receiver according to claim 7 or 8, in which the impulse processing means thereafter continues to detect all values which exceed the predetermined value as interference until a gap of a second predetermined time interval is encountered without any interference.

10. An OFDM receiver according to any preceding claim, in which the impulse processing means detects digital values indicative of impulsive interference only when at least two samples occurring within one OFDM symbol reach or exceed the predetermined value are detected as interference.
